# EUROPEAN PATENT APPLICATION

(11) **EP 4 794 057 A1**
(43) Date of publication of application: **19.08.2026**
(21) Application number: 25867338.3
(22) Date of filing: 18.07.2025
(51) Int. Cl.: H01M 10/613, H01M 10/6568

(54) **LIQUID COOLING ASSEMBLY AND BATTERY PACK**

(30) Priority: 25.12.2024 CN 202423220509 U
(71) Applicant: Eve Energy Co., Ltd., Huizhou, Guangdong 516006 (CN)
(72) Inventor: ZHAO, Yuhang, Huizhou, Guangdong 516006 (CN); HUANG, Liansheng, Huizhou, Guangdong 516006 (CN); HE, Yuqi, Huizhou, Guangdong 516006 (CN); ZHOU, Xiao, Huizhou, Guangdong 516006 (CN)
(74) Representative: Zhu, Puxing
(86) International application number: PCT/CN2025/109421
(87) International publication number: WO 2026/137814

(57) **Abstract**

A liquid cooling assembly and a battery pack are provided. The liquid cooling assembly includes a plurality of liquid cooling plates arranged at intervals and a main pipe. An installation space for mounting at least one heat-generating element is formed between two adjacent liquid cooling plates. Each of the liquid cooling plates includes a flow passage portion and a plurality of nozzles in communication with the flow passage portion. The main pipe includes a plurality of connectors, and the connectors are in one-to-one expansion connection to the nozzles and are inserted into the nozzles. An inner wall of each of the connectors is provided with a support ring that overlaps each of the nozzles (11).

## Description

This application claims priority to Chinese Patent Application No. 202423220509.5 filed with on December. 25, 2024, the entire contents of which are incorporated herein by reference.

### TECHNICAL FIELD

The present disclosure relates to the field of batteries, and more particularly, to a liquid cooling assembly and a battery pack.

### BACKGROUND

In the related art, liquid cooling assemblies can be disposed between heat-generating bodies to reduce their temperature. The heat-generating bodies may be batteries or similar components. The liquid cooling assembly includes a liquid cooling plate and a pipeline connected to the liquid cooling plate. Due to the compact structure between two adjacent liquid cooling plates, the connection between the pipeline and the liquid cooling plate is often challenging to implement. Generally, a bellows expansion connection is employed to achieve the connection between the pipeline and the liquid cooling plate in the liquid cooling assembly.

### SUMMARY

Due to the material tolerance existing in the pipes, the bellows, and the liquid cooling plates, as well as the assembly tolerances present after the pipes, bellows, and liquid cooling plates are assembled, the connection reliability between the pipes and the liquid cooling plates is poor, which can easily lead to liquid leakage and affect the cooling performance of the liquid cooling assembly.

Therefore, there is an urgent need to address the above drawbacks.

The present disclosure provides a liquid cooling assembly including the following components.

A plurality of liquid-cooled plates arranged at intervals are included. An installation space for mounting at least one heat-generating element is formed between two adjacent liquid cooling plates. Each of the liquid cooling plates includes a flow passage portion and a plurality of nozzles in communication with the flow passage portion.

A main pipe is included. The main pipe includes a plurality of connectors that are in one-to-one expansion connection to the nozzles and are inserted into the nozzles. An inner wall of each of the connectors is provided with a support ring that overlaps each of the nozzles. An elastic modulus of the support ring is greater than an elastic modulus of the connectors.

The present disclosure also provides a battery pack. The battery pack includes the liquid-cooled assembly described above, and the heat-generating elements are a battery.

### BENEFICIAL EFFECT

The liquid cooling assembly provided in the present disclosure features the support ring arranged on the inner wall of the connector, and the elastic modulus of the support ring is made larger than that of the connector, making the support ring less prone to deformation compared to the connector. This prevents the connector from being crushed after insertion, thereby avoiding liquid leakage. Consequently, it addresses the issue of poor connection reliability between the connector and the liquid cooling plate, which often leads to liquid leakage and impairs the cooling performance of the liquid cooling assembly.

The battery pack provided in the present disclosure incorporates the aforementioned liquid cooling assembly, with the heat-generating element being a battery. By disposing the support ring on the inner wall of the connector and ensuring the support ring has a higher elastic modulus than the connector, the support ring is less prone to deformation compared to the connector. This prevents the connector from being crushed after insertion, thereby avoiding liquid leakage. Consequently, it addresses the issue of poor connection reliability between the connector and the liquid cooling plate, which often leads to liquid leakage and impairs the cooling performance of the liquid cooling assembly

### BRIEF DESCRIPTION OF THE DRAWINGS

FIG. 1 is a perspective view of a liquid cooling assembly according to a possible implementation of the present disclosure.
FIG. 2 is a schematic view of the liquid cooling plate of FIG. 1.
FIG. 3 is a perspective view of the partial structure of FIG. 1.
FIG. 4 is an exploded view of the partial structure of FIG. 3.
FIG. 5 is a top schematic view of the partial structure of FIG. 3.
FIG. 6 is a schematic cross-sectional view at A-A in FIG. 5.
FIG. 7 is a schematic view of partial structure of the main pipe of FIG. 1.
FIG. 8 is a schematic view of a battery pack according to a possible implementation of the present disclosure.

### List of Reference numerals:

Liquid cooling assembly 1, Heat-generating element 2;
Liquid cooling plate 10, Nozzle 11, Boss 111, Flow passage portion 12;
Main pipe 20, Connector 21, Connection portion 211, Convex portion 212, Support ring 22, Body portion 23, Support arm 231, Clamping grooves 231a, Buckle 232, Limiting structure 2321, Sub-pipe 25, First connector 251, Claw 2511, Seal ring 2512, Second connector 252, and Flange 2521;
Distance L1 between a surface of the boss 111 and a surface of the buckle 232 facing each other, Distance L2 between the end of the second connector 252 and the root of the claw 2511 in the connection direction of the second connector 252 and the first connector 251;
Battery pack 3.

### DETAILED DESCRIPTION OF EMBODIMENTS

In the description of the present disclosure, unless expressly specified and defined otherwise, the terms "connect", "couple", and "fix" should be interpreted broadly. For example, it may be a fixed connection, a detachable connection, or an integral connection; it may be a mechanical connection, an electrical connection, or a direct connection, or may be an indirect connection through an intermediary medium. It may refer to the internal communication between two elements or the interaction relationship between two elements. For those of ordinary skill in the art, the specific meanings of the above terms in the present disclosure may be understood based on the specific context.

In the present disclosure, unless expressly specified and defined otherwise, the expression that a first feature is "on" or "under" a second feature may include direct contact between the first and second features, or may include contact between the first and second features through additional features between them, rather than direct contact. Moreover, the expressions "on", "above", and "over" regarding the first feature relative to the second feature include the first feature being directly above or obliquely above the second feature, with the horizontal height of the first feature being greater than that of the second feature. The expressions "under", "below", and "beneath" regarding the first feature relative to the second feature include the first feature being directly below or obliquely below the second feature, with the horizontal height of the first feature being less than that of the second feature.

In the description of embodiments, terms such as "upper", "lower", "left", "right", "front", and "rear" indicating orientation or positional relationships are based on the orientations or positional relationships shown in the accompanying drawings. These terms are used to facilitate description and simplify operation, and are not intended to indicate or imply that the referred apparatus or elements must have specific orientations or be constructed and operated in specific orientations. Therefore, these terms should not be construed as limiting the present disclosure. Furthermore, the terms "first" and "second" are used for descriptive differentiation only and do not have any special meanings.

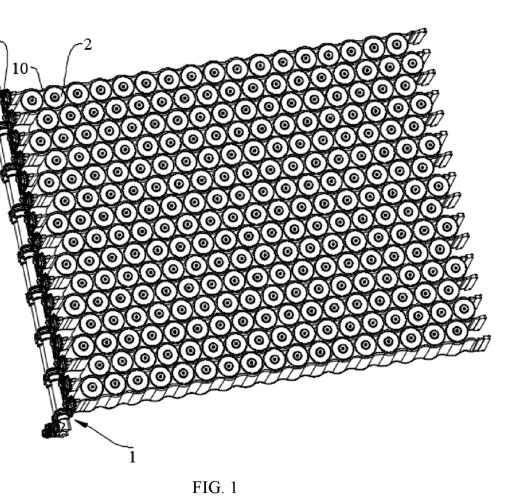

In a first aspect, as shown in FIGs. 1 to 7, an embodiment of the present disclosure provides a liquid cooling assembly 1 including a plurality of liquid cooling plates 10 arranged at intervals and a main pipe 20. An installation space provided for mounting heat-generating elements 2 are formed between two adjacent liquid cooling plates 10. Each liquid cooling plate 10 includes a flow passage portion 12 and at least one nozzle 11 communicating with the flow passage portion 12. The main pipe 20 includes a plurality of connectors 21 which are in one-to-one expansion connection to the plurality of nozzles 11. The connectors 21 are inserted into the nozzles 11. An inner wall of the connector 21 is provided with a support ring 22. The support ring 22 overlaps the nozzle 11, and the elastic modulus of the support ring 22 is larger than that of the connector 21.

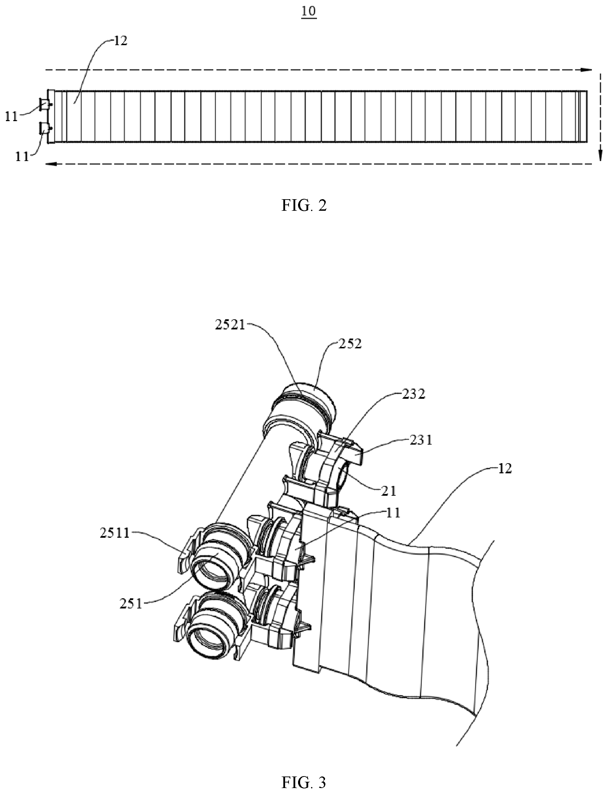

The shape of the liquid cooling plates 10 can be adaptively adjusted according to the shape of the heat-generating elements 2. As shown in FIGs. 1 and 2, when the heat-generating elements 2 are cylindrical batteries, the liquid-cooled plates 10 may be serpentine plates. The serpentine plate 10 includes a plurality of arc surfaces connected to each other, and any one of the arc surfaces may be matched with the outer surface of each of the cylindrical batteries, thereby increasing the contact area between the serpentine plate and the cylindrical batteries, and improving the cooling effect.

When the heat-generating elements 2 are prismatic batteries, the shape of the liquid-cooled plates 10 may be a flat plate. The flat plate has a planar surface so as to match the surface of each of the prismatic batteries, thereby increasing the contact area between the flat plate and the prismatic batteries. When the heat-generating elements 2 have another shapes, the shape of the liquid cooling plates 10 may also be matched with the outer surface of each of the heat-generating elements 2. The present disclosure does not limit the shape of the liquid-cooled plates 10.

The flow passage portion 12 has an internal flow channel, and the cooling liquid can flow along the flow channel so as to carry away the heat generated by the heat-generating elements 2, thereby achieving temperature uniformity and a cooling effect.

As shown in FIGs. 1 and 2, two nozzles 11 may be provided at one end of the flow passage portion 12. One of the two nozzles 11 is provided as a liquid inlet and the other nozzle 11 is provided as a liquid outlet. The nozzles 11 have an internally hollow tubular structure, and the cooling liquid can flow from the hollow tubular structure in one of the nozzles 11 into the flow channel in the flow passage portion 12, circulate through the flow channel, and then exit via the other nozzle 11. The dashed arrows in FIG. 2 show the flow path of the cooling liquid, which is U-shaped between the two nozzles 11. With the above configuration, the flow resistance in the liquid cooling assembly 1 can be reduced, thereby saving the space occupied by the liquid cooling assembly 1. Meanwhile, a single liquid-cooled plate 10 can achieve the function of temperature neutralization, and reduce the temperature difference among the heat-generating elements 2 corresponding to the same liquid-cooled plate 10 in the length direction.

Alternatively, in other embodiments, one nozzle 11 is provided at each end of the flow passage portion. The cooling liquid can flow from one nozzle 11 into the flow channel of the flow passage portion 12, and exits via the other nozzle 11. The flow path of the cooling liquid is a unidirectional line from one end of the flow passage portion 12 to the other end.

As shown in FIGs. 1 and 3, the main pipe 20 includes at least one connector 21. The connector(s) 21 correspond one-to-one with the nozzle(s) 11 and are connected by expansion. The number of connectors 21 is equal to the number of nozzles 11. The connector 21 has a hollow tubular structure. The cooling liquid flows through the passage inside the connector 21, the passage inside the nozzle 11, and the flow channel of the flow passage portion 12. The main pipe 20 may be at least one of an inlet pipeline or a liquid return pipeline.

The connector 21 and the nozzle 11 are connected by expansion. Expansion connection refers to applying radial pressure to the connector 21 and the nozzle 11 through plastic deformation, thereby achieving sufficient connection strength and sealing reliability. For example, the connector 21 may be of a flexible material that can undergo plastic deformation under force. The connector 21 is in interference fit with the nozzle 11, causing the flexible material to be compressed, thus obtaining sufficient connection strength and sealing reliability.

Alternatively, in some embodiments, the material of the connector 21 may include ethylene propylene diene monomer (EPDM), thermoplastic elastomer (TPE), thermoplastic polyurethane (TPU), and other similar flexible materials.

The connector 21 is inserted into the nozzle 11, that is, at the insertion point, the connector 21 is located in the nozzle 11. The support ring 22 overlaps the nozzle 11, that is, the nozzle 11 is fitted around the periphery of the support ring 22. Since the elastic modulus of the support ring 22 is larger than that of the connector 21, when the connector 21 is inserted into the nozzle 11, the support ring 22 is less prone to deformation compared to the connector 21. This prevents the connector 21 from being easily crushed, thereby avoiding leakage at the connection between the connector 21 and the nozzle 11, which could affect the cooling performance of the liquid cooling assembly 1. Elastic modulus refers to the ratio of stress to strain. A higher elastic modulus indicates that the material is less prone to deformation, while a lower elastic modulus indicates that the material is more easily deformed.

The support ring 22 may be of a material that is not easily deformable, such as metal. The material of the support ring 22 may include copper, iron, steel, or the like, but is not limited thereto.

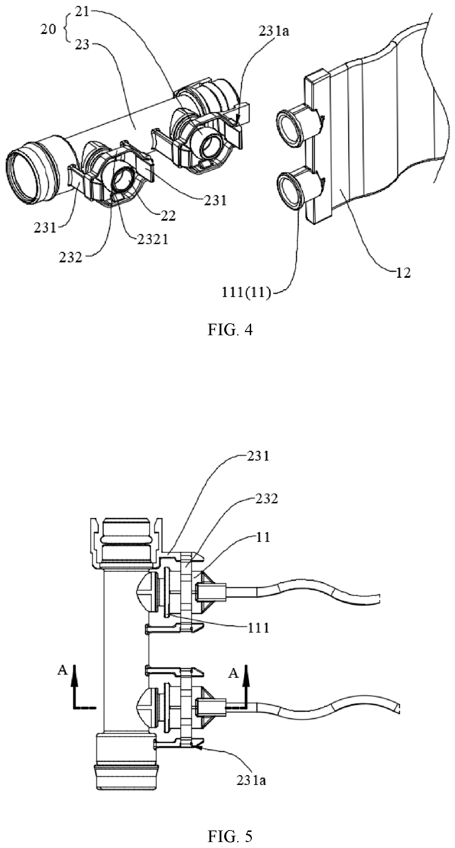

In some embodiments, as shown in FIG. 4, the main pipe 20 includes a body portion 23 and at least one connector 21 connected to the body portion 23, and the elastic modulus of the connector 21 is less than that of the body portion 23.

The material of the body portion 23 and the connector 21 may be different. The elastic modulus of the connector 21 is less than that of the body portion 23, that is, the connector 21 is more easily deformed relative to the body portion 23, enabling it to form an expansion connection with the nozzle 11. In contrast, the body portion 23 is less prone to deformation than the connector 21, meaning it has higher mechanical strength and is more robust and durable.

Alternatively, the material of the body portion 23 may include Polyamide 66 (PA66), polyphenylene sulfide (PPS), modified polyphenylene ether (PPE), polytrimethylene terephthalate (PPA), and other similar materials.

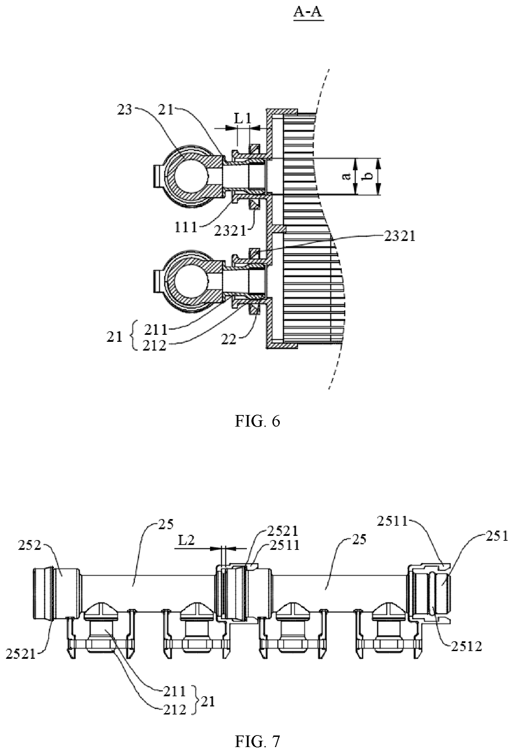

In some embodiments, as shown in FIGs. 6 and 7, the connector 21 includes a connection portion 211 and a convex portion 212 that are arranged close to each other. The convex portion 212 is provided at an end of the connection portion 211 away from the body portion 23. The support ring 22 is correspondingly disposed on the inner wall of the convex portion 212. The outer diameter of the convex portion 212 is larger than the outer diameter of the connection portion 211.

As shown in FIG. 6, the materials of the connection portion 211 and the convex portion 212 may be the same. The convex portion 212 is located close to the open end of the connector 21, and the connection portion 211 connects the convex portion 212 to the body portion 23. The support ring 22 is nested in the inner wall of the convex portion 212, and the width of the support ring 22 may be less than or equal to the width of the convex portion 212. The width refers to the dimension along the direction of the axis of the connector 21.

Alternatively, as shown in FIG. 6, the surface of the support ring 22 close to the open end of the connector 21 is flush with the surface of the convex portion 212 close to the open end of the connector 21, thereby enhancing the mechanical strength of the convex portion 212 and preventing the connector 21 from being crushed during insertion.

In some embodiments, as shown in FIG. 6, the inner diameter of the nozzle 11 is a first dimension a and the outer diameter of the convex portion 212 is a second dimension b, satisfying 0.2≤(b-a)/a≤0.9.

To achieve an expansion connection between the nozzle 11 and the convex portion 212, the nozzle 11 is in interference fit with the convex portion 212. The interference fit means that the inner diameter of the nozzle 11 is less than the outer diameter of the convex portion 212, ensuring a tight connection after insertion and preventing fluid leakage.

Alternatively, to accommodate assembly tolerances between the convex portion 212 and the nozzle 11, the outer diameter of the convex portion 212 and the inner diameter of the nozzle 11 satisfy 0.2≤(b-a)/a≤0.9.

It is to be noted that the inner diameter of the nozzle 11 may be of uniform size, i.e., the inner diameter of the nozzle 11 at any point in the insertion direction is the same. The outer diameter of the convex portion 212 may be of a non-uniform size, i.e., the outer diameter of the convex portion 212 may vary at least at two points along the insertion direction. For example, in the insertion direction of the nozzle 11 and the connector 21, the outer diameter of the end of the convex portion 212 away from the body portion 23 is less than the outer diameter of the end of the convex portion 212 close to the body portion 23. By the above-described configuration, the size of the end of the convex portion 212 away from the body portion 23 can be reduced, making it easier to insert the convex portion 212 into the nozzle 11.

In some embodiments, as shown in FIGs. 4 to 6, the body portion 23 is provided with support arms 231 located on opposite sides of the connector 21. The side surfaces of the support arms 231 facing away from each other are provided with the clamping grooves 231a. The main pipe 20 further includes at least one buckle 232 engaged with the clamping grooves 231a. The buckle 232 is provided around the connector 21. The end of the nozzle 11 away from the flow passage portion 12 is provided with a boss 111. The buckle 232 is provided on the side of the boss 111 close to the flow passage portion 12. A limiting structure 2321 is provided on the side surface of the buckle 232 close to the axial center of the connector 21, and the limiting structure 2321 is provided to prevent the boss 111 from being away from the body portion 23 in the insertion direction.

As shown in FIG. 4, the support arm 231 is provided on the outer wall of the body portion 23 and extends in a direction away from the body portion 23. One support arm 231 is provided on each of opposite sides of the connector 21. The support arm 231 is spaced from the connector 21 so as to prevent the support arm 231 from interfering with the nozzle 11, which could affect the insertion of the connector 21 into the nozzle 11.

As shown in FIG. 5, two support arms 231 provided on opposite sides of the same connector 21 are arranged in the axial direction of the body portion 23. When the main pipe 20 is molded by an injection molding process, the support arms 231 arranged in the axial direction of the body portion 23 do not affect the demolding of the mold.

As shown in FIGs. 4 to 6, the side surfaces of the support arms 231 facing away from each other are provided with the clamping grooves 231a, which can be engaged with the buckles 232. The width of the clamping grooves 231a may be matched to the width of the buckle, and the clamping grooves 231a may prevent the buckle 232 from moving in the insertion direction of the connector 21 and the nozzle 11. The buckle 232 is in an annular configuration, and the buckle 232 surrounds the periphery of the connector 21. It is to be noted that the clamping groove 231a prevents the buckle 232 from rotating about the axis of the connector 21.

As shown in FIGs. 4 and 6, one side surface of the buckle 232 close to the axis of the connector 21 is provided with the limiting structure 2321 which cooperates with the boss 111 and is provided to prevent the nozzle 11 from being disengaged from the connector 21.

It will be appreciated that to facilitate insertion of the nozzle 11 and the connector 21, the limiting structure 2321 does not hinder movement of the nozzle 11 in the direction from the connector 21 toward the body portion 23. Specifically, the limiting structure 2321 has an inclined plane, and the spacing between the two opposite limiting structures 2321 increases in a direction away from the body portion 23. During insertion, the boss 111 is slidable along the inclined surface of the limiting structure 2321. After the insertion is completed, the boss 111 is located on the side of the limiting structure 2321 away from the flow passage portion 12. When the nozzle 11 is disengaged from the connector 21 in the insertion direction, the limiting structure 2321 interferes with the boss 111, thereby preventing the connector 21 from being disengaged from the nozzle 11.

As shown in FIG. 6, the boss 111 and the limiting structure 2321 prevent the connector 21 from being disengaged from the nozzle 11, but also prevent the nozzle 11 from not being inserted in place by the cooperation of the boss 111 and the limiting structure 2321.

Alternatively, in order to ensure the reliability of the assembly, the distance L1 between the mutually facing surfaces of the boss 111 and the limiting structure 2321 is in the range of 0.1 mm to 20 mm. Here, the mutually facing surfaces refer to the surface of the boss 111 facing the limiting structure 2321 and the surface of the limiting structure 2321 facing the boss 111.

In some embodiments, as shown in FIGs. 1 and 7, the main pipe 20 includes a plurality of sub-pipes 25 arranged separately, which are connected in turn. At least some of the sub-pipes 25 are provided with connectors 21.

To reduce the variety of materials required for the main pipe 20, it can be formed from multiple sub-pipes 25 with identical structures. This helps minimize the types of sub-pipes 25, facilitates standardization of components, and reduces production management costs. For example, each sub-pipe 25 may include the same number of connectors 21. For example, each sub-pipe 25 may have two spaced connectors 21, in which case the sub-pipe 25 acts as a four-way connector. The sub-pipe 25 may also have other numbers of connectors 21, such as three, four, five, and six, which are not limited herein.

When the sub-pipe 25 has two connectors 21, the structure of the sub-pipe 25 is easier to process, and the manufacturing cost of the sub-pipe 25 can be reduced. When the sub-pipe 25 has fewer connectors 21, it is more capable of absorbing positional deviations among the multiple liquid liquid cooling plates 10 connected to the same sub-pipe 25, thereby reducing assembly difficulty.

Specifically, the plurality of liquid cooling plates 10 may be stacked with the heat-generating elements 2, and then the plurality of sub-pipes 25 may be aligned with the liquid cooling plates 10 by means of a tool. Subsequently, the plurality of sub-pipes 25 and the liquid cooling plates 10 can be inserted simultaneously.

In some embodiments, as shown in FIG. 7, one end of each sub-pipe 25 is provided with a first connector 251 and the other end with a second connector 252. The first connector 251 of one sub-pipe 25 is connected to the second connector 252 of an adjacent other sub-pipe 25. The outer wall of the first connector 251 is provided with a claw 2511, the outer wall of the second connector 252 is provided with a flange 2521, and the claw 2511 is engaged with the flange 2521.

As shown in FIG. 7, the first connector 251 and the second connector 252 are different in configuration. The first connector 251 of one sub-pipe 25 can be inserted into the second connector 252 of an adjacent other sub-pipe 25. When the first connector 251 is inserted into the second connector 252, the first connector 251 is located in the second connector 252 after insertion. In this case, the outer side wall of the first connector 251 is in contact with the inner side wall of the second connector 252. The first connector 251 is in interference fit with the second connector 252 to ensure connection strength and sealing reliability.

In an embodiment, as shown in FIG. 7, the outer wall of the first connector 251 is provided with a groove. The groove is arranged coaxially with the first connector 251, meaning the groove is annular. The depth of the groove is less than the thickness of the outer wall of the first connector 251. A seal ring 2512 is provided in the groove. The material of the seal ring 2512 may include an elastic material such as rubber. The seal ring 2512 is sleeved outside the first connector 251.

The inner wall of the second connector 252 is in contact with the seal ring 2512. That is, the seal ring 2512 is disposed between the side walls of the first connector 251 and the second connector 252. After the insertion between the first connector 251 and the second connector 252, the seal ring 2512 is in a compressed state, and the seal ring 2512 can absorb tolerances between the first connector 251 and the second connector 252, thereby ensuring connection strength and sealing reliability.

In an embodiment, as shown in FIG. 7, the outer wall of the first connector 251 is provided with the claw 2511, the outer wall of the second connector 252 is provided with the flange 2521, and the claw 2511 is engaged with the flange 2521. Two adjacent sub-pipes 25 are connected via a quick-connect mechanism using the claw 2511 and the flange 2521. After the claw 2511 is engaged with the flange 2521, the second connector 252 and the first connector 251 can be prevented from falling off in the connection direction.

The relative positional relationship between the claw 2511 and the flange 2521 can be visually seen, facilitating judgment of whether the first connector 251 and the second connector 252 are properly expanded and connected.

In some embodiments, as shown in FIG. 7, the distance L2 between the end of the second connector 252 and the root of the claw 2511 in the connection direction of the second connector 252 and the first connector 251 is 1 mm to 20 mm.

The connection direction of the second connector 252 and the first connector 251 refers to the axial direction of the second connector 252. Since the distance L1 between the first connector 251 and the second connector 252 in the connection direction is 1 mm to 20 mm, the distance L1 between the centers of the two adjacent sub-pipes 25 can be adjusted within this range. This allows the connector 21 to better align with the nozzle 11, absorbs assembly tolerances, reduces assembly difficulty, and improves grouping efficiency.

It is to be understood that when the distance L2 between the end of the second connector 252 and the root of the claw 2511 in the connection direction of the second connector 252 and the first connector 251 is 1 mm to 20 mm, the claw 2511 and the flange 2521 are in the engaged state, and the distance L1 between the claw 2511 and the flange 2521 is greater than or equal to 0 mm.

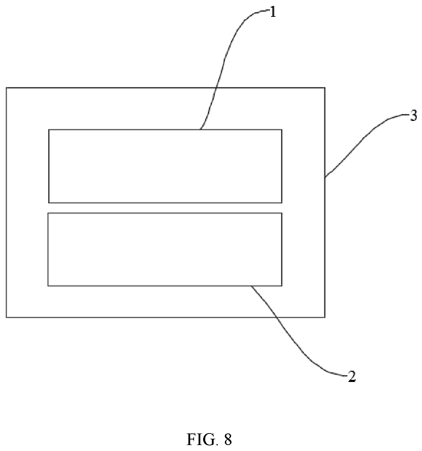

In a second aspect, as shown in FIG. 8, an embodiment of the present disclosure provides a battery pack including the above-described liquid cooling assembly 1, wherein the heat-generating elements 2 are batteries.

In the present embodiment, referring to FIG. 1, the heat-generating element 2 may be a battery, such as a cylindrical battery and a prismatic battery. The batteries are disposed in the installation space between two adjacent liquid cooling plates 10, which can cool the batteries.

## Claims

1. A liquid cooling assembly (1) comprising:
a plurality of liquid cooling plates (10) arranged at intervals, wherein an installation space for mounting at least one heat-generating element (2) is formed between two adjacent ones of the liquid cooling plates (10); each of the liquid cooling plates (10) comprises a flow passage portion (12) and at least one nozzle (11) in communication with the flow passage portion (12);
a main pipe (20) comprising a plurality of connectors (21), wherein the connectors (21) are in one-to-one expansion connection to the nozzle (11) and are inserted into the nozzle (11), an inner wall of each of the connectors (21) is provided with a support ring (22), the support ring (22) overlaps each of the nozzle (11), and an elastic modulus of the support ring (22) is greater than an elastic modulus of the connectors (21).

2. The liquid cooling assembly (1) according to claim 1, wherein the main pipe (20) comprises a body portion (23) to which the connectors (21) are connected, the elastic modulus of the connectors (21) is less than an elastic modulus of the body portion (23).

3. The liquid cooling assembly (1) according to claim 2, wherein each of the connectors (21) comprises a connection portion (211) and a convex portion (212) that are adjacently disposed, the convex portion (212) is disposed at an end of the connection portion (211) away from the body portion (23), the support ring (22) is correspondingly disposed on an inner wall of the convex portion (212), and an outer diameter of the convex portion (212) is larger than an outer diameter of the connection portion (211).

4. The liquid cooling assembly (1) according to claim 3, wherein an inner diameter of each of the nozzle (11) is a first dimension a, and an outer diameter of the convex portion (212) is a second dimension b, satisfying 0.2≤ (b-a)/a≤0.9. close to

5. The liquid cooling assembly (1) according to any one of claims 2 to 4, wherein the body portion (23) is provided with support arms (231) on opposite sides of the connectors (21), clamping grooves (231a) are provided on side surfaces of the support arms (231) facing away from each other, the main pipe (20) further comprises buckles (232) engaged with the clamping grooves (231a), the buckles (232) are provided around the connectors (21); an end of each of the nozzle (11) away from the flow passage portion (12) is provided with a boss (111), each of the buckles (232) is provided on a side of the boss (111) close to the flow passage portion (12), a side surface of each of the buckles (232) close to an axis of the connectors (21) is provided with a limiting structure (2321), and the limiting structure (2321) is provided to prevent the boss (111) from moving away from the body portion (23) in an insertion direction.

6. The liquid cooling assembly (1) according to claim 5, wherein a distance (L1) between a surface of the boss (111) and a surface of the limiting structure (2321) facing each other is in a range of 0.1 mm to 20 mm.

7. The liquid cooling assembly (1) according to any one of claims 1 to 4, wherein the main pipe (20) comprises a plurality of sub-pipes (25) arranged separately and connected sequentially; and at least some of the sub-pipes (25) have the connectors (21).

8. The liquid cooling assembly (1) according to claim 7, wherein one end of each of the sub-pipes (25) is provided with a first connector (251) and another end is provided with a second connector (252); the first connector (251) of one of the sub-pipes (25) is connected to the second connector (252) of an adjacent another one of the sub-pipes (25); an outer wall of the first connector (251) is provided with a claw (2511), an outer wall of the second connector (252) is provided with a flange (2521), and the claw (2511) is engaged with the flange (2521).

9. The liquid cooling assembly (1) according to claim 8, wherein a distance (L2) between an end of the second connector (252) and a root of the claw (2511) in a connection direction of the second connector (252) and the first connector (251) is 1 mm to 20 mm.

10. A battery pack comprising the liquid cooling assembly (1) according to any one of claims 1 to 9, wherein the at least one heat-generating element (2) is a battery.
